# EUROPEAN PATENT APPLICATION

(11) **EP 4 266 538 A2**
(43) Date of publication of application: **25.10.2023**
(21) Application number: 23168751.8
(22) Date of filing: 19.04.2023
(51) Int. Cl.: H02J 7/00, A01D 34/00

(54) **ROBOTIC TOOL AND CHARGING STATION**

(30) Priority: 21.04.2022 US 202263333384 P
(71) Applicant: Techtronic Cordless GP, Anderson, SC 29621 (US)
(72) Inventor: LAI, Hok Sum Sam, Kwai Chung (HK); CHOI, Man Ho, Kwai Chung (HK); NG, Ho Lam, Kwai Chung (HK); LI, Shing Hin, Kwai Chung (HK)
(74) Representative: Zimmermann & Partner Patentanwälte mbB

(57) **Abstract**

A charging station for use with a robotic garden tool, the charging station including a base having an upper surface and a lower surface, the lower surface of the base being configured to be supported on a support surface, a charging terminal coupled to the upper surface of the base, where the charging terminal includes a positive electrode and a ground electrode electrically insulated from the positive electrode, where the positive electrode and the ground electrode are configured to selectively extend upward to a location vertically above the upper surface of the base.

## Description

### CROSS-REFERENCE TO RELATED APPLICATION

This application claims priority to prior-filed, co-pending U.S. Provisional Patent Application No. 63/333,384 filed on April 21, 2022. The entire contents of which is incorporated herein by reference.

### FIELD OF THE INVENTION

The embodiments described herein related to a robotic garden tool, and more specifically to a charging station for use with the robotic garden tool.

### BACKGROUND OF THE INVENTION

Robot tools are typically used with some form of charging station to allow the tool to recharge any internal batteries from time to time.

### SUMMARY

In one aspect, a charging station for use with a robotic garden tool, the charging station including a base having an upper surface and a lower surface, the lower surface of the base being configured to be supported on a support surface, a charging terminal coupled to the upper surface of the base, where the charging terminal includes a positive electrode and a ground electrode electrically insulated from the positive electrode, where the positive electrode and the ground electrode are configured to selectively extend upward to a location vertically above the upper surface of the base.

Alternatively or additionally, in any combination, where the charging terminal is convex and includes a flexible material to permit deformation of the convex charging terminal.

Alternatively or additionally, in any combination, where the charging terminal includes an outer portion, an intermediate portion and a central portion, the outer portion substantially encircling the intermediate portion, and the intermediate portion substantially encircling the central portion, where the outer portion and the central portion are formed from a conductive material and where the intermediate portion is formed from an insulating material.

Alternatively or additionally, in any combination, where the charging terminal includes a plurality of radially nested portions.

Alternatively or additionally, in any combination, where the charging terminal includes a moveable member configured to move from a first position in which the moveable member is near the upper surface of the base and a second position in which the moveable member extends vertically above the upper surface of the base, where at least a portion of the moveable member is formed from a conductive material.

Alternatively or additionally, in any combination, where the moveable member is configured to pivot between the first position and the second position.

Alternatively or additionally, in any combination, where the charging terminal includes a first moveable member configured to move from a first position in which the first moveable member is near the upper surface of the base and a second position in which the first moveable member extends vertically above the upper surface of the base, at least a portion of the first moveable member is formed from a conductive material, and a second moveable member configured to move from a first position in which the second moveable member is near the upper surface of the base and a second position in which the second moveable member extends vertically above the upper surface of the base, at least a portion of the second moveable member is formed from a conductive material.

In another aspect, a robotic garden tool including a body having a front end, a rear end opposite the front end, an upper surface and a lower surface opposite the upper surface, one or more driven wheels mounted to the body, a working tool mounted to the body, a battery, and a charging port open to the lower surface of the body, the charging port including a positive electrode and a ground electrode that is electronically isolated from the positive electrode.

Alternatively or additionally, in any combination, where the charging port is positioned between the front end and the working tool.

Alternatively or additionally, in any combination, where the charging port is concave such that the positive and ground electrodes extend into the body.

Alternatively or additionally, in any combination, where the charging port includes an outer portion, an intermediate portion and a central portion, the outer portion substantially encircling the intermediate portion, and the intermediate portion substantially encircling the central portion, where the outer portion and the central portion are formed from a conductive material and where the intermediate portion is formed from an insulating material.

Alternatively or additionally, in any combination, where the charging port includes a plurality of radially nested portions.

Alternatively or additionally, in any combination, where the charging port includes a contact coupled to a flexible member, the flexible member permitting limited vertical movement of the contact with respect to the body, the flexible member retaining the contact near the lower surface of the body, where at least a portion of the contact is formed from a conductive material.

Alternatively or additionally, in any combination, where the contact is a first contact the flexible member is a first flexible member, the charging port further comprising a second contact coupled to a second flexible member, the second flexible member permitting limited vertical movement of the second contact with respect to the body, the second flexible member retaining the second contact near the lower surface of the body, where at least a portion of the second contact is formed from a conductive material.

In still another aspect, a robotic garden tool kit including a charging station including a base having an upper surface and a lower surface, the lower surface of the base being configured to be supported on a support surface, and a charging terminal coupled to the upper surface of the base, where the charging terminal includes a positive electrode and a ground electrode, and a robotic garden tool. The robotic garden tool includes a body having an upper surface and a lower surface opposite the upper surface, one or more driven wheels mounted to the body, a working tool mounted to the body, a battery, and a charging port including a positive electrode positioned near the lower surface of the body, and a ground electrode positioned near the lower surface of the body, where the robotic garden tool is configured to move to a location above the charging terminal, such that while the charging port is positioned vertically above the charging terminal, the positive electrode of the base is in electrical communication with the positive electrode of the of the charging terminal is in electrical contact with the positive electrode of the charging port, and the ground electrode of the charging terminal is in electrical contact with the ground electrode of the charging port.

Alternatively or additionally, in any combination, where the charging terminal is convex and includes a flexible material to permit downward deformation of the convex charging terminal, where the body has a front end and a rear end opposite the front end, where the charging port is positioned between the front end and the working tool, and where the charging port is concave such that an outer portion of the charging port is connected to the lower surface of the body and an inner portion of the charging port is recessed above the lower surface of the body.

Alternatively or additionally, in any combination, where the charging terminal includes an outer portion, an intermediate portion and a central portion, the outer portion substantially encircling the intermediate portion, and the intermediate portion substantially encircling the central portion, where the outer portion and the central portion are formed from a conductive material and where the intermediate portion is formed from an insulating material, and where the charging port includes an outer portion, an intermediate portion and a central portion, the outer portion substantially encircling the intermediate portion, and the intermediate portion substantially encircling the central portion, where the outer portion and the central portion are formed from a conductive material and where the intermediate portion is formed from an insulating material.

Alternatively or additionally, in any combination, where the charging port includes a contact coupled to a flexible member, the flexible member permitting limited vertical movement of the contact with respect to the body, the flexible member retaining the contact near the lower surface of the body, where at least a portion of the contact is formed from a conductive material, where the charging terminal includes a moveable member configured to move from a first position in which the moveable member is near the upper surface of the base and a second position in which the moveable member extends vertically above the upper surface of the base, and where at least a portion of the moveable member is formed from a conductive material.

Alternatively or additionally, in any combination, where the moveable member is configured to pivot between the first position and the second position in response to the charging port being positioned vertically above the charging terminal.

Alternatively or additionally, in any combination, where the charging port of the charging station is configured to supply a first charge while the robotic garden tool is spaced from the charging station, and is configured to supply a second charge while the robotic garden tool is positioned above the charging station, the second charge being greater than the first charge.

Alternatively or additionally, in any combination, further comprising a cleaning element positioned on one of the charging station and the robotic garden tool, the cleaning element configured to remove debris from the charging port while the robotic garden tool is positioned vertically above the charging station.

In still another aspect, a charging station for use with a robotic garden tool, the charging station including a base, and a charging terminal coupled to the base, where the charging terminal includes a positive electrode and a ground electrode electrically insulated from the positive electrode, wherein the charging terminal is convex.

Alternatively or additionally, in any combination, where the positive electrode and the ground electrode are electrically isolated from one another by an intermediate portion.

Alternatively or additionally, in any combination, where the positive electrode and the ground electrode are formed from conductive material and wherein the intermediate portion is formed from an insulating material.

Alternatively or additionally, in any combination, where the charging terminal includes an outer portion, the intermediate portion and a central portion, the outer portion substantially encircling the intermediate portion, and the intermediate portion substantially encircling the central portion.

Alternatively or additionally, in any combination, where the outer portion forms one of the ground electrode and the positive electrode and where the central portion forms the other of the ground electrode and the positive electrode.

Alternatively or additionally, in any combination, where charging terminal is resiliently deformable.

### BRIEF DESCRIPTION OF THE DRAWINGS

FIG. 1 is a plan view of a robotic garden tool positioned within a cutting area encompassed by a barrier.
FIG. 2 is a side view of the garden tool and docking station of FIG. 1.
FIG. 2A is a side view of another embodiment of a garden tool.
FIG. 3 is a top view of the garden tool and docking station of FIG. 1.
FIG. 4 is a front view of the garden tool of FIG. 1
FIG. 5 is a front view of a charging station for use with the garden tool of FIGS. 1 and 4.
FIG. 6 is a front view of a garden tool approaching a charging station.
FIG. 7 is a front view of the garden tool positioned on the charging station of FIG. 6.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

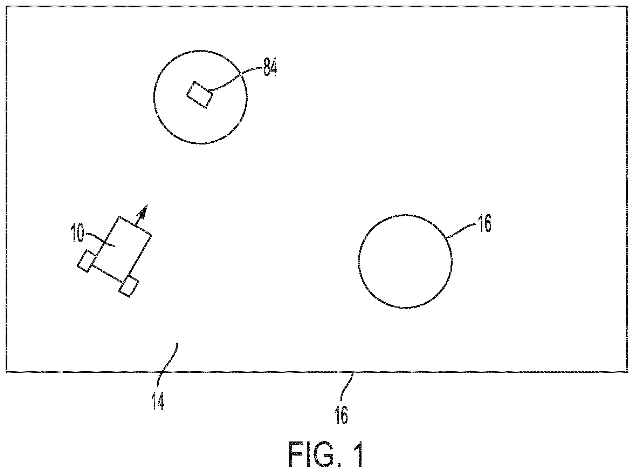

Figures 1-3 illustrate a robotic garden tool 10. More specifically, the garden tool 10 includes a robotic lawn mower for use to cut vegetation such as grass in an enclosed cutting area 14. The cutting area 14 generally includes, but is not limited to, a continuous area of grass or other vegetation that is enclosed by one or more barriers 16. In the illustrated embodiment, the barriers 16 include a series of electrified wires enclosing the cutting area 14 while in alternative embodiments different form of barrier may be used such as, but not limited to, walls, pavers, GPS data points, and the like. As shown in FIG. 1, such barriers 16 may be used to enclose the overall cutting area 14 and/or to segregate one or more interior regions from the cutting area 14. While the illustrated tool 10 is a robotic mower, it is understood that in alternative embodiments other forms of robotic tool may be used including, but not limited to, a robotic trimmer, a robotic sprinkler, a robotic fertilizer spreader, and the like.

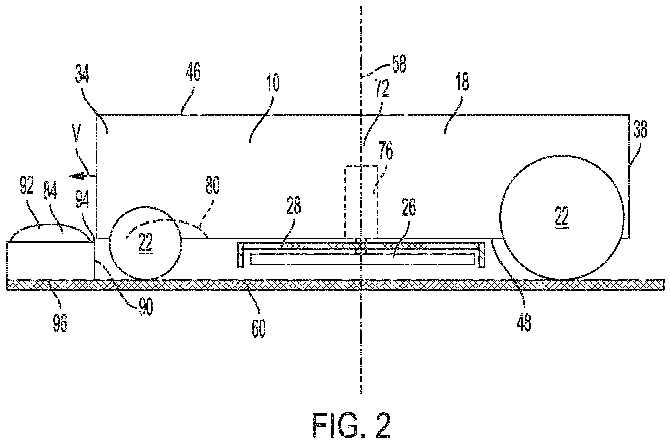

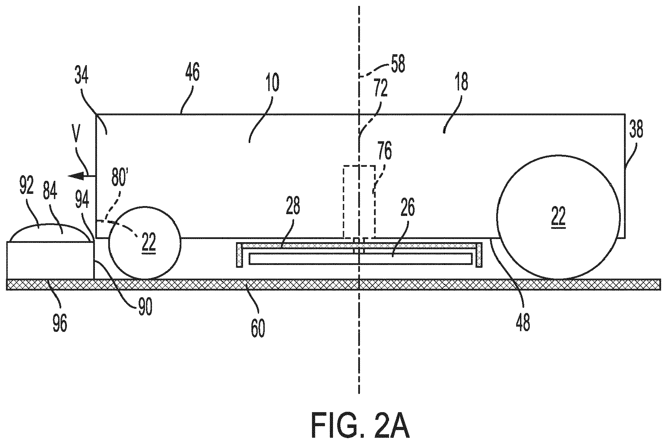

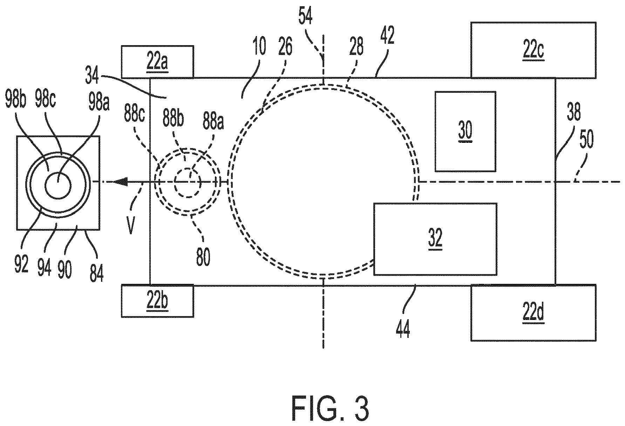

As shown in FIGS. 2 and 3, the tool 10 is an electrically powered, self-propelled device that includes a body 18, a plurality of wheels 22 rotatably mounted to the body 18, a working tool 26 mounted to the body 18, a guard 28 extending around the working tool 26, a controller 30, a battery 32, and a charging port 80. The body 18, in turn, includes a front or first end 34, rear or second end 38 opposite the first end 34, a right or first side 42, a left or second side 44 opposite the first side 42, an upper or top surface 46 and a lower or bottom surface 48 opposite the upper surface 46. The body 18 also defines a longitudinal axis 50 extending along the length of the body 18 and centered between the first side 42 and the second side 44 (e.g., passing through both the first and second ends 34, 38). The body 18 also defines a lateral axis 54 extending along the width of the body 18 and centered between the first and second ends 34, 38 (e.g., passing through both the first and second sides 42, 44). The body 18 also defines a central axis 58 generally positioned at the intersection of the longitudinal and lateral axes 50, 54 and oriented perpendicular to both (e.g., in a generally vertical orientation).

As shown in FIG. 3, the tool 10 includes four wheels 22a, 22b, 22c, 22d, each rotatably coupled to the body 18 and configured to support the tool 10 for self-driven movement along a support surface 60 (e.g., the surface of the cutting area 14). In the illustrated embodiment, the wheels 22a, 22b, 22c, 22d include two steerable, undriven wheels 22a, 22b and two non-steerable, driven wheels 22c, 22d. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the tool 10 may include more or fewer wheels 22 positioned in different arrangements about the tool 10. In still other embodiments, the wheels 22 may be replaced by other forms of propulsion such as, but not limited to, tracks, omni-wheels, walking legs, and the like.

As shown in FIGS. 2 and 3, the working tool 26 includes a rotating blade mounted for relative rotation about a blade axis 72. More specifically, the blade 26 is mounted to a dedicated blade motor 76 which rotates the blade 26 during use. In the illustrated embodiment, the blade axis 72 is oriented vertically (e.g., parallel to the central axis 58) and positioned proximate the center of the body 18. In some embodiments, the blade axis 72 may be coincident with the central axis 58. While the illustrated working tool 26 is a rotating blade, it is understood that in alternative embodiments the tool 10 may include, but is not limited to, reciprocating blades, a distributor or dispenser of some kind, and the like. The tool 10 is configured to travel in a direction V during operation.

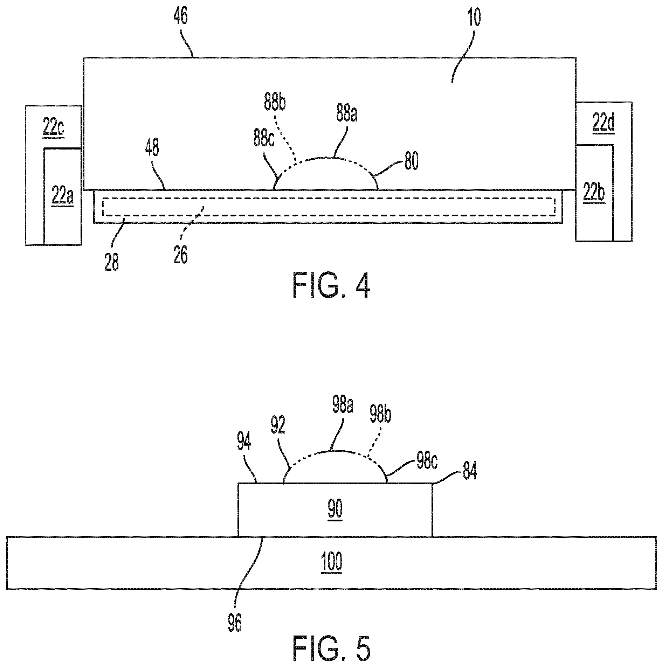

As shown in Figs. 2-4, the tool 10 also includes a charging port 80. The charging port 80 is in operable communication with at least the battery 32 of the tool 10 and configured to create a temporary electrical connection with a charging station 84 (described below) to convey the electrical energy output by the charging station 84 to the battery 32 for re-charging operations. More specifically, the charging port 80 includes a concave recess formed into and open to the bottom surface 48 of the body 18 of the tool 10. As shown in FIGS. 3 and 4, the charging port 80 includes a central or first portion 88a, an outer or second portion 88c, and an intermediate portion 88b positioned between and electrically isolating the central portion 88a from the outer potion 88c. In the illustrated embodiment, all three portions 88a, 88b, 88c are concentric resulting in a circular central portion 88a, an annular intermediate portion 88b, and an annular outer portion 88c. While the illustrated charging port 80 is circular in overall shape, it is understood that in other embodiments different shapes of concentric portions be used including, but not limited to, elliptical, polygonal, and the like.

The central and outer portions 88a, 88c of the charging port 80 are formed from conductive material (e.g., metal); forming a positive and ground electrode, respectively. In contrast, the intermediate portion 88b is formed from an insulating material to electrically isolate the central portion 88a from the outer portion 88c. In other embodiments, the central portion 88a may form the ground electrode while the outer portion 88c forms the positive electrode. Furthermore, while the illustrated charging port 80 includes three portions forming a single set of electrodes (positive and ground and insulating buffer), it is understood that in alternative embodiments more concentric portions may be included to allow for additional circuits to be formed between the port 80 and the charging station 84. Such additional circuits may be used for, but are not limited to, data communication, docking verification, and the like.

In the illustrated embodiment, the charging port 80 is positioned between the first end 34 and the guard 28 of the working tool 26, being centered side-to-side along the lateral axis 54. However, in alternative embodiments the charging port 80 may be positioned in alternative positions on the bottom surface 48 of the tool 10 to best accommodate the docking process between the tool 10 and the charging station 84. For example, in some embodiments the charging port 80 may be positioned between the second end 38 and the guard 28. In still other embodiments, the charging port 80' may be positioned adjacent and open to one of the ends 34, 38, 42, 44 of the body 18 of the tool. In still other embodiments, more than one charging port 80 may be present on a single body 18 to accommodate docking approaches from multiple directions and/or conditions.

With reference to Figs. 2-5, the charging station 84 includes a charging terminal 92 and a core or base 90 to support, position, and orient the charging terminal 92 relative to the support surface 60. During use, the charging station 84 is electrically connected to a power source, such as a battery or an electrical outlet, whereby the charging station 84 is configured to provide an electrical mounting point to which the charging port 80 of the tool 10 can dock to allow for electrical communication therebetween.

The base 90 of the charging station 84 has an upper surface 94 and a lower surface 96. Together, the upper surface 94 and the lower surface 96 produce a vertical base height configured to position the terminal 92 at a height substantially corresponding to the height of the underside 48 of the tool 10. The lower surface 96 can be supported on the support surface 60. The base 90 can be any suitable shape to accommodate the approach and docking between the tool 10 and the charging station 84. In the illustrated embodiment, the base 90 is sized to fit between the front wheels 22a, 22b of the tool 10. In other embodiments, the base 90 may include tapered sidewalls (e.g., narrowing in width as it extends radially outwardly) to help guide the tool 10 into alignment with the charging terminal 92. In still other embodiments, the base 90 may have beveled sidewalls (e.g., angled vertically downwardly) to allow the wheels 22 of the tool 10 to ride up onto and across the base 90. In still other embodiments the base 90 may include one or more stakes extending therefrom (not shown) to allow the base 90 to be secured to a soft support surface 60 such as soil and the like. In still other embodiments, the base 90 may be attached to support surface or mat 100 (see FIG. 5) to provide additional support, for example on hard support surfaces 60 such a concrete and the like.

In embodiments, where a mat 100 is present (see FIG. 5), the mat 100 may be wider than the tool 10, such that the tool 10 can be fully supported on the mat 100 during the docking process. In some embodiments, the mat 100 is positioned directly on the support surface 60. In still other embodiments, different forms of support may be interchangeable to the base 90 so the user can accommodate the desired installation location. While the illustrated base 90 and mat 100 are described as separate elements, it is understood that in still other embodiments the base 90 and mat 100 may be formed integrally together as a single unit.

The charging terminal 92 of the charging station 94 is sized and shaped to correspond with the size and shape of the charging port 80 of the tool 10 to form a temporary electrical connection therebetween. In the illustrated embodiment, the charging terminal 92 is a convex, generally dome-shaped protrusion, extending from the upper surface 94 of the base 90. As shown in FIG. 5, the terminal 92 includes a first or central portion 98a, a second or outer portion 98c, and an intermediate portion 98b extending between and electrically isolating the central portion 98a from the outer portion 98c.

In the illustrated embodiment, all three portion 98a, 98b, 98c are concentric having sizes and shapes that generally correspond to the sizes and shapes of the three portions 88a, 88b, 88c of the charging port 80. More specifically, the illustrated outer portion 98c encircles the intermediate portion 98b, and the illustrated intermediate portion 98b encircles the central portion 98a. Similar to the charging port 80, the intermediate portion 98b is formed from an insulating material while the central and outer portions 98a, 98c are formed from conductive material (e.g., metal). In the illustrated embodiments, the outer portion 98c is a positive electrode, and the central portion 98a is a ground electrode to mirror the layout of the charging port 80. In other embodiments, the central portion 98a is the positive electrode and the outer portion 98c is the ground electrode. Other shapes, sizes and configurations of charging terminals can be utilized in other embodiments. For example, in some embodiments the three portions 98a, 98b, 98c may include other nested shaped (e.g., rectangular, polygonal, and the like), parallel strips, and the like.

At least a portion of the charging terminal 92 is made from a resilient, flexible material to permit deformation of the charging terminal 92 to accommodate the body 18 of the tool 10. More specifically, the dome shape of the charging terminal 92 causes the charging terminal 92 to act as a spring, whereby the terminal 92 will deform when subject to an external force (e.g., contacting the body 18 of the tool 10) and resiliently return to the original domed shape upon removal of the external force. This permits the terminal 92 to deform out of the way of the body 18 and resiliently expand up and into the charging port 80 once aligned therewith. In other embodiments, the first end 34 of the tool 10 includes a resilient, deformable material that deforms in response to the first end 34 of the tool 10 moving across the charging terminal 92.

The charging terminal 92 is sized to be at least partially received within the charging port 80 such that the central portions 88a, 98a form an electrical connection, and the outer portions 88c, 98c form an electrical connection.

During use, the charging station 84 is configured so that the tool 10 can approach the charging station 84 from any direction and the charging port 80 of the tool 10 and the charging terminal 92 of the charging station 84 can form an electrical connection.

To dock the tool 10 to the charging terminal 92, the tool 10 first approaches the charging station 84 while traveling in a direction V. As stated above, the tool 10 may approach the charging station radially from any direction across a 360-degree arc.

After the tool 10 reaches the terminal 92, the first end 34 contacts the terminal 92 and begins to deform the terminal 92. More specifically, the first end 34 vertically compresses the terminal 92 such that the terminal 92 can pass below the body 18 while being in contact with the bottom surface 48 thereof. The terminal 92 then remains compressed below the body 18 until the terminal 92 becomes aligned with the charging port 80. Once aligned, the terminal 92 will resiliently expand back to its original configuration - expanding upwardly into the recess of the charging port 80. By doing so, the central and outer portions 98a, 98c of the terminal 92 come into contact and form an electrical connection with the central and outer portions 88a, 88c of the charging port 80 respectively. With the electrical connection made, the charging station 84 may then provide electrical power to the battery 32 of the tool 10 for the charging process.

After the charging process is complete, the tool 10 may disengage from the terminal 92. To do so, the tool 10 may travel in a second direction, opposite the direction V, whereby the terminal 92 is again compressed by the body 18 of the tool 10 so that it can pass underneath the bottom surface 48 thereof. After the tool 10 is no longer overlapping the terminal 92, the terminal 92 can resiliently expand back to its original dome-shaped configuration.

Although not shown, in alternative embodiments, the resiliency of the terminal 92 may permit the tool 10 to continue to travel in direction V after the charging process is complete. By doing so, the tool 10 does not need to turn or maneuver after the charging process.

In some alternative embodiments, one or more ramps or moving members can raise the front end 34 of the tool 10 over the charging terminal 92 and then lower the tool 10 when the charging port 80 is generally aligned with the charging terminal 92. Such ramps can be used together with the resilient nature of the terminal 92 (e.g., so that less deformation is required to allow the terminal 92 to pass under the body 18), or in place of the resiliency (e.g., the vertical displacement produced by the ramps produce the necessary clearance for the terminal 92 to pass under the body 18).

In still other alternative embodiments, a switch and/or sensor may be coupled to the mat 100 to sense the presence of the tool 10. While the tool 10 is not positioned on the mat 100, the charging station 84 is configured to supply a first charge to the charging terminal 92. While the tool 10 is positioned on the mat 100, the charging station 84 is configured to provide a second charge to the charging terminal 92. The first charge is smaller, and in some cases, significantly smaller, than the second charge. In some embodiments, the first charge is between 0 and 30 volts, and the second charge is greater than 30 volts. In some embodiments, the first charge is between 0 and 20 volts, and the second charge is greater than 35 volts.

In still other embodiments, the charging port 80' is in the shape of a half dome adjacent and open to one of the ends 34, 39, 42, 44 (see FIG. 2A). In such embodiments, the central portion 88a is a semi-circle that abuts the first end 34 of the tool 10, and the intermediate portion 88b and outer portion 88c extend in a semi-circular ring with each end abutting the first end 34 of the tool 10. The charging terminal 92 could still remain as a full dome to permit the tool 10 to approach the charging station 84 from any number of directions. In some embodiments, the tool 10 is configured to depart from the charging station 84 in a different direction than it approached the charging station 84.

In still other embodiments, debris, such as grass clippings, may be removed from the charging port 80 while the tool 10 approaches the charging station 84 to allow for a better electrical connection to be formed therebetween. For example, a blower (not shown) can be activated by the presence of the tool 10 on or near the charging station 84. The blower can be angled upward to blow air into and across the charging port 80 prior to the charging terminal 92 extending into the charging port 80. In still other embodiments, a brush (not shown) may be coupled to the charging station 84, (i.e., extending upwardly from an upper surface of the mat 100) so that when the tool 10 approaches the charging station 84, the brush extends upwardly into at least a portion of the charging port 80. By doing so, the process of traveling over the brush causes the brush to wipe away any debris located within the charging port 80 prior to the charging terminal 92 extending into the charging port 80.

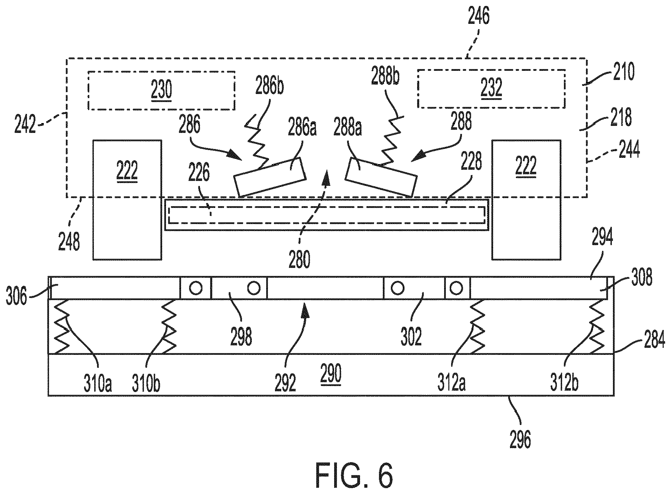

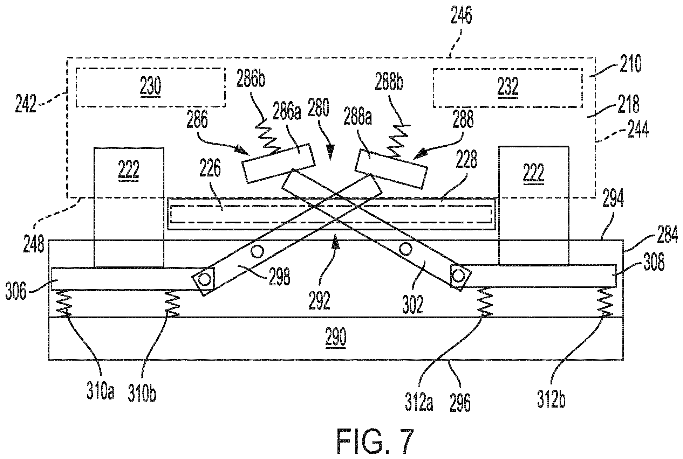

Figs. 6 and 7 illustrate another embodiment of a tool 210 and a charging station 284. The tool 210 and charging station 284 are substantially similar to the tool 10 and charging station 84 described above. As such, only the differences will be discussed in detail herein. The charging port 280 of the tool 210 is in operable communication with at least the battery 232 of the tool 210 and configured to create a temporary electrical connection with a charging station 284 (described below) to convey the electrical energy output by the charging station 284 to the battery 232 for re-charging operations. More specifically, the illustrated charging port 280 includes a first electrode 286 and a second electrode 288. The first electrode 286 includes first contact 286a and a first flexible member 286b, and the second electrode 288 includes a second contact 288a and a second flexible member 288b. In some embodiments, the first electrode 286 is a positive electrode and the second electrode 288 is a ground electrode. In other embodiments, the first electrode 286 is the ground electrode and second electrode 288 is the positive electrode.

The flexible members 286b, 288b of the electrodes 286, 288 permit limited movement of the respective contacts 286a, 286a relative to the body 218. The flexible members 286b, 288b retaining the respective contact 286a, 288a in a rest position near the lower surface 248 of the body 218 until being biased away therefrom by an external force (e.g., contact with electrode 298, 302 of the docking station 284, described below). At least a portion of the first contact 286a, and a least a portion of the second contact 288a is formed from a conductive material.

The illustrated charging port 280 is positioned between a front end of the body 218 and the guard 228. In some embodiments, the charging port 280 may be positioned between a rear end of the body 218 and the guard 228. Other shapes, sizes and configurations of charging ports can be utilized in other embodiments.

The charging station 284 includes a base 290 and a charging terminal 292. The charging station 284 is configured to provide an electrical mounting point to which the charging port 280 of the tool 210 can dock to allow for temporary electrical communication therebetween. The base 290 of the charging station 284 includes an upper surface 294 and a lower surface 296. When installed, the lower surface 296 can be supported on a support surface 60 while the upper surface 294 is configured to support at least two of the wheels 222 of the tool 10 thereon. In the illustrated embodiment, the base 290 may include a beveled edge or ramp to allow the wheels 222 of the tool 210 to drive up onto and traverse across the upper surface 294 of the base 290. The illustrated base 290 is larger than the tool 210, such that the tool 210 can be fully supported on the base 290. In still other embodiments, different forms of support may be interchangeable to the base 290 so the user can accommodate the desired installation location.

The charging station 284 is electrically connected to a power source, such as a battery or an electrical outlet. The charging terminal 292 includes a first electrode 298 and a second electrode 302. The first electrode 298 is an elongate member movably coupled to the base 290 for pivoting about the base 290 between a first or stowed position (see FIG. 6) and a second or deployed position (see FIG. 7). In the first position, the first or contact end of the first electrode 298 is positioned near or below the upper surface 294 of the base 290 (e.g., the first electrode 298 does not engage or make an electrical connection with a tool 210 positioned on the charging station 284) while in the second position, the contact end of the first electrode 298 extends vertically above the upper surface 294 of the base 290 (e.g., the first electrode 298 does engage and make an electrical connection with a tool 210 positioned on the charging station 284). In the illustrated embodiment, the contact end of the first electrode 298 is formed from a conductive material.

The second electrode 302 is an elongate member coupled to the base 290 for pivoting about the base 290 between a first or stowed position (see FIG. 6) and a second or deployed position (see FIG. 7). In the first position, the first or contact end of the second electrode 302 is positioned near or below the upper surface 294 of the base 290 (e.g., the second electrode 302 does not engage or make an electrical connection with a tool 210 positioned on the charging station 284), while in the second position, the contact end of the second electrode 302 extends vertically above the upper surface of the base 290 (e.g., the second electrode 302 does engage and form an electrical connection with a tool 210 positioned on the charging station 284). In the illustrated embodiment, the contact end of the second electrode 201 is formed from a conductive material.

The base 290 also includes a first moveable plate member 306 supported on a first biasing member and a second moveable plate member 308 supported on a second biasing member. The first and second moveable plate member 306, 308 are sized to each receive one of the wheels 222 thereon. More specifically, both movable plate members 306, 308 are movable relative to the base 290 between a rest position, in which the plate members 306, 308 are coplanar with the upper surface 294 of the base 290 (see FIG. 6), and a displaced position, in which the plate members 306, 308 are displaced below the upper surface 294 (see FIG. 7). The illustrated first biasing member is a pair of coil springs 310a, 31 0b, and the illustrated second biasing member is a pair of coil springs 312a, 312b. Other biasing members could be used in place of or in addition to the illustrated coil springs.

As shown in FIGS. 6 and 7, the first moveable plate member 306 is coupled to a second end of the first electrode 298 so that vertical movement of the first movable plate member 306 between the rest and displaced positions causes the first electrode 284 to pivot between the stowed and deployed positions. More specifically, the first movable plate member 306 is configured so that the first electrode 284 is in the stowed position when the plate 306 is in the rest position (see FIG. 6), and wherein moving the plate member 306 toward the displaced position causes the first electrode 284 to pivot from the stowed position toward the deployed position (see FIG. 7).

The second moveable plate member 308 is coupled to a second end of the second electrode 302 so that vertical movement of the second movable plate member 308 between the rest and displaced positions causes the second electrode 302 to pivot between the stowed and deployed positions. More specifically, the second movable plate member 308 is configured so that the second electrode 302 is in the stowed position when the plate 308 is in the rest position (see FIG. 6), and wherein moving the plate member 308 from the rest position toward the displaced position causes the second electrode 302 to pivot from the stowed position toward the deployed position (see FIG. 7).

During use, the tool 210 may drive up onto the upper surface 294 of the base 290 until each of the front two wheels 222 are positioned on a corresponding one of the plate members 306, 308. With the tool 210 in position, the weight of the tool 210 presses the plate members 306, 308 downward against the respective coil springs 310a, 310b, 312a, 312b, causing each plate 306, 308 to travel from the rest position toward the displaced position. The motion of the plate members 206, 208, in turn, causes both electrodes 298, 302 to pivot from the stowed position toward the deployed position. Once in the deployed position, the first electrode 298 and second electrode 302 engage and form an electrical connection with the second contact 288 and the first contact 286, respectively. Upon removal of the tool 210 from the plate members 306, 308, the coil springs 310a, 310b, 312a, 312b return the respective plate members 306, 308 to the rest position (see Fig. 6).

In some embodiments, the first electrode 298 is a positive electrode and the second electrode 302 is a ground electrode. In other embodiments, the first electrode 298 is the ground electrode and second electrode 302 is the positive electrode. Other shapes, sizes and configurations of charging terminals can be utilized in other embodiments.

In some embodiments, a switch and/or sensor is coupled to the base 290 to sense the presence of the tool 210. While the tool 210 is not positioned on the base 290 (i.e., Fig. 6), the charging station 284 is configured to supply a first charge to the charging terminal 292. While the tool 210 is positioned on the base 290 (i.e., FIG. 7), the charging station 284 is configured to provide a second charge to the charging terminal 292. The first charge is smaller, and in some cases, significantly smaller, than the second charge. In some embodiments, the first charge is between 0 and 30 volts, and the second charge is greater than 30 volts. In some embodiments, the first charge is between 0 and 20 volts, and the second charge is greater than 35 volts.

In some embodiments, debris, such as grass clippings, is removed from the charging port 280 while the tool 210 approaches the charging station 284. For example, a blower (not shown) can be activated by the presence of the tool 210 on or near the charging station 284. The blower can be angled upward to blow air into and across the first and second contacts 286a, 286b of the charging port 280 prior to engaging the respective electrode 298, 302 of the charging terminal 292. In some instances, a brush (not shown) is coupled to the charging station 284, (i.e., extending upwardly from an upper surface of the base 290). When the tool 210 approaches the charging station 284, the brush extends upwardly into at least a portion of the charging port 280 to clean off the first and second contacts 286a, 286b prior to the engaging the first and second electrodes 298, 302 with the respective first and second contacts 286a, 296b.

Both of the robotic garden tool 10, 210 can be recharged from engagement with one or more contacts positioned on or near a lower surface of the robotic garden tool 10, 210.

## Claims

1. A charging station for use with a robotic garden tool, the charging station comprising:
a base having an upper surface and a lower surface, the lower surface of the base being configured to be supported on a support surface;
a charging terminal coupled to the upper surface of the base, wherein the charging terminal includes a positive electrode and a ground electrode electrically insulated from the positive electrode, wherein the positive electrode and the ground electrode are configured to selectively extend upward to a location vertically above the upper surface of the base.

2. The charging station of claim 1, wherein the charging terminal is convex and includes a flexible material to permitdeformation of the convex charging terminal.

3. The charging station of claim 2, wherein the charging terminal includes an outer portion, an intermediate portion and a central portion, the outer portion substantially encircling the intermediate portion, and the intermediate portion substantially encircling the central portion, wherein the outer portion and the central portion are formed from a conductive material and wherein the intermediate portion is formed from an insulating material.

4. The charging station of claim 1, wherein the charging terminal includes a plurality of radially nested portions.

5. The charging station of claim 1, wherein the charging terminal includes a moveable member configured to move from a first position in which the moveable member is near the upper surface of the base and a second position in which the moveable member extends vertically above the upper surface of the base, wherein at least a portion of the moveable member is formed from a conductive material.

6. The charging station of claim 5, wherein the moveable member is configured to pivot between the first position and the second position.

7. The charging station of claim 1, wherein the charging terminal includes a first moveable member configured to move from a first position in which the first moveable member is near the upper surface of the base and a second position in which the first moveable member extends vertically above the upper surface of the base, at least a portion of the first moveable member is formed from a conductive material, and a second moveable member configured to move from a first position in which the second moveable member is near the upper surface of the core and a second position in which the second moveable member extends vertically above the upper surface of the base, at least a portion of the second moveable member is formed from a conductive material.

8. A robotic garden tool comprising:
a body having a front end, a rear end opposite the front end, an upper surface and a lower surface opposite the upper surface;
one or more driven wheels mounted to the body;
a working tool mounted to the body;
a battery; and
a charging port open to the lower surface of the body, the charging port including a positive electrode, and a ground electrode that is electronically isolated from the positive electrode.

9. The robotic garden tool of claim 8, wherein the charging port is positioned between the front end and the working tool.

10. The robotic garden tool of claim 8 wherein the charging port is concave such that the positive and ground electrodes extend into the body.

11. The robotic garden tool of claim 8, wherein the charging port includes an outer portion, an intermediate portion and a central portion, the outer portion substantially encircling the intermediate portion, and the intermediate portion substantially encircling the central portion, wherein the outer portion and the central portion are formed from a conductive material and wherein the intermediate portion is formed from an insulating material.

12. The robotic garden tool of claim 8, wherein the charging port includes a plurality of radially nested portions.

13. The robotic garden tool of claim 8, wherein the charging port includes a contact coupled to a flexible member, the flexible member permitting limited vertical movement of the contact with respect to the body, the flexible member retaining the contact near the lower surface of the body, wherein at least a portion of the contact is formed from a conductive material.

14. The robotic garden tool of claim 13, wherein the contact is a first contact the flexible member is a first flexible member, the charging port further comprising a second contact coupled to a second flexible member, the second flexible member permitting limited vertical movement of the second contact with respect to the body, the second flexible member retaining the second contact near the lower surface of the body, wherein at least a portion of the second contact is formed from a conductive material.

15. A charging station for use with a robotic garden tool, the charging station comprising:
a base; and
a charging terminal coupled to the base, wherein the charging terminal includes a positive electrode and a ground electrode electrically insulated from the positive electrode, wherein the charging terminal is convex.

16. The charging station of claim 15, wherein the positive electrode and the ground electrode are electrically isolated from one another by an intermediate portion.

17. The charging station of claim 16, wherein the positive electrode and the ground electrode are formed from conductive material and wherein the intermediate portion is formed from an insulating material.

18. The charging station of claim 16, wherein the charging terminal includes an outer portion, the intermediate portion and a central portion, the outer portion substantially encircling the intermediate portion, and the intermediate portion substantially encircling the central portion.

19. The charging station of claim 16, wherein the outer portion forms one of the ground electrode and the positive electrode and wherein the central portion forms the other of the ground electrode and the positive electrode.

20. The charging station of claim 15, wherein charging terminal is resiliently deformable.
